# EUROPÄISCHE PATENTSCHRIFT

(11) **EP 0 675 994 B1**
(45) Veröffentlichungstag und Bekanntmachung des Hinweises auf die Patenterteilung: **26.06.1996**
(21) Anmeldenummer: 94903865.7
(22) Anmeldetag: 22.12.1993
(51) Int. Cl.: E05B 63/04, E05C 9/02, E05C 9/18

(54) **VERSCHLUSSVORRICHTUNG FÜR TÜREN VON GEHÄUSEN ODER SCHRÄNKEN**
LOCKING DEVICE FOR CABINET OR CUPBOARD DOORS
DISPOSITIF DE FERMETURE POUR PORTES DE BOITIERS OU D'ARMOIRES

(30) Priorität: 22.12.1992 DE 9217546 U; 20.04.1993 DE 9305893 U
(43) Veröffentlichungstag der Anmeldung: 11.10.1995
(73) Patentinhaber: KNÜRR-MECHANIK FUR DIE ELEKTRONIK AKTIENGESELLSCHAFT, D-81829 Munchen (DE); DIRAK DIETER RAMSAUER KONSTRUKTIONSELEMENTE GmbH & Co. KG, D-58332 Schwelm (DE)
(72) Erfinder: SIMON, Peter, D-81377 München (DE); FLAMME, Hans, D-82008 Unterhaching (DE); STREIFENEDER, Robert, D-94431 Pilsting (DE); RAMSAUER, Dieter, D-38108 Braunschweig (DE)
(74) Vertreter: Heim, Hans-Karl, Dipl.-Ing.
(86) Internationale Anmeldenummer: EP9303667
(87) Internationale Veröffentlichungsnummer: WO9415050

(56) Entgegenhaltungen:
- EP-A- 0 261 266
- EP-A- 0 443 177
- EP-A- 0 504 044
- GB-A- 2 072 740
- GB-A- 2 208 524
- US-A- 3 296 842

## Beschreibung

Die Erfindung betrifft eine Verschlußvorrichtung für Türen von Gehäusen oder Schränken, insbesondere für Türen von modular aufgebauten Schranksystemen, die für Elektroniker- oder Techniker-Arbeitsplätze zur Aufnahme von elektronischen Geräten oder Baugruppen Anwendung finden.

Um Schränke oder Gehäuse in 19-Zoll-Bauweise und auch in metrischer Bauweise herstellen zu können und um einen möglichst großen und leicht zugänglichen nutzbaren Innenraum zur Verfügung zu haben, empfiehlt sich die Verwendung eines möglichst schmalen Gegenanschlags, beispielsweise eines schmalen Hohlprofils als Rahmengestell, an welches Seiten- und Rückwände sowie Türen befestigt werden.

Es ist bekannt, abnehmbare Seiten- und/oder Rückwände vom Außen- oder Innenraum her zu sichern und eine Schranktür mit einer Verschlußvorrichtung, beispielsweise einem Türschloß, zu versehen, um einen unbefugten Zugriff auf die Einbaugeräte zu verhindern. Außerdem ist in den meisten Anwendungsfällen auch im Türbereich eine Abdichtung gegen Staub- und Wassereintritt und darüberhinaus eine HF-Abschirmung zu gewährleisten, was ebenfalls eine sichere Zuhaltung einer Tür voraussetzt.

Gebräuchliche Verschlußsvorrichtungen erfordern für auf der Schrankseite als Gegenanschlag anzubringende Schließbleche mit Riegelaufnahmen für horizontal verstellbare Riegel entsprechend breite Rahmenholme, die bei einer Schrankbauweise mit schmaleren Rahmenprofilen nur bedingt eingebaut werden können.

In der EP 0 504 044 A1 ist eine Verschlußvorrichtung für Schranktüren beschrieben, bei welcher eine einteilige, mit drei Öffnungen versehene Grundplatte an einem Türblatt angeordnet oder in dieses integriert ist. Die Öffnungen korrespondieren mit Bohrungen in dem Türblatt, an dessen Innenseite eine Verriegelungsmechanik angeordnet ist. Die Verschlußvorrichtung ist für einen rechts- und linksseitigen Anschlag geeignet, wobei die jeweils obere Öffnung mit einer Blindabdeckung versehen wird. In eine mittlere oder untere Öffnung greift ein Betätigungselement ein und bewegt die Schließstange. Für Türen mit schmalen Gegenanschlägen ist diese aufwendig konstruierte Verschlußvorrichtung wenig geeignet.

Aus der GB-A 20 72 740 ist ein Fensterdrehstangenverschluß bekannt, der insbesondere für Fensterflügel mit schmalen Fensterrahmen vorgesehen ist. Die Vorrichtung weist einen Zahnstangenmechanismus auf, der am Fensterrahmen außen überstehend montiert wird. Lediglich ein Antriebsflansch reicht in den Bereich des Fensterrahmens und ist mit einer Drehstange verbunden. Riegelelemente an der Drehstange wirken mit Aufnahmen, welche am festen Fensterrahmen angeordnet sind, zusammen. Diese Fensterverriegelungsvorrichtung ist aufgrund des seitlich überstehenden Betätigungsmechanismus nur begrenzt anwendbar und für Gehäuse und Schränke, insbesondere für Elektroniker- und Techniker-Arbeitsplätze nicht geeignet.

Aus der Er 0 261 266 B1 ist eine Verschlußvorrichtung zum Einbau in Blechschranktüren bekannt, welche im Bereich eines Türschildes eine Grundplatte mit einem verschließbaren Schwenkhebel aufweist. Als Schließeinrichtung ist ein in den unteren Ansatz der Grundplatte eingreifendes Zylinderschloß vorgesehen. Im Bereich eines oberen Ansatzes ist ein mit dem Schwenkhebel betätigbares Gelenkdornritzel angeordnet, welches mit wenigstens einer Schließstange in Wirkverbindung steht. Die konstruktive Ausbildung der Verschlußvorrichtung ermöglicht den Einbau in den Verkantungsraum einer Schranktür. Die Befestigung erfolgt mit Hilfe von in Durchbrüche des Türblattes einsetzbaren oder die Durchbrüche hintergreifenden Ansätze der Grundplatte des Türschildes und mit einem Kappen- oder Halteteil, welches jeweils von der Türinnenseite aufgeschraubt wird.

Diese Verschlußvorrichtung ist für links- und rechtsseitig anschlagende Türen geeignet. Eine nachträgliche Änderung des Anschlags macht jedoch eine Demontage der wenigstens einen Schließstange und des Schlosses erforderlich. Ein Einbau in Schränke oder Gehäuse mit besonders schmalen Rahmenprofilen ist nur bedingt möglich. Außerdem kann sich die im Bereich der Grundplatte geführte Schließstange ungünstig auf die konstruktive Gestaltung, insbesondere im Bereich des Zylinderschlosses, auswirken.

Der Erfindung liegt die **Aufgabe** zugrunde, eine kostengünstige und funktionssichere Verschlußvorrichtung zu schaffen, deren konstruktive Gestaltung auch bei schmalen Gegenanschlägen, beispielsweise bei schmalen Schrank- und Gehäuserahmenprofilen, und darüber hinaus unabhängig von der Anschlagseite einer Tür einen Einbau ermöglicht.

Erfindungsgemäß wird die Aufgabe durch die Merkmale des Anspruchs 1 gelöst. Zweckmäßige und vorteilhafte Ausgestaltungen sind in der Figurenbeschreibung und in den Unteransprüchen enthalten.

Die Erfindung geht von der Überlegung aus, eine Verschlußvorrichtung in zwei Bereiche zu teilen und eine Zuhaltung und eine Riegelmechanik so auszubilden und anzuordnen, daß eine von einer Handhabe ausgelöste Schließbewegung einer Umlenkung, vorzugsweise von etwa 90 Grad, in Richtung auf einen Gegenanschlag unterzogen und eine Schließ- oder Öffnungsstellung von wenigstens einem Verriegelungselement in einer schrank- oder gehäuseseitigen Aufnahme erreicht wird.

Erfindungsgemäß ist eine Verschlußvorrichtung mit einer im Bereich eines Türschildes angeordneten Handhabe und einer über eine Zuhaltung betätigbaren Riegelmechanik zweigeteilt ausgebildet, wobei auch das auf einer Außenfläche eines Türblattes angeordnete Türschild zweigeteilt ausgebildet ist.

Das zweigeteilte Türschild weist einen ersten Türschildbereich mit einer Grundplatte auf, an welcher als Handhabe beispielsweise ein Schwenkhebel, ein Knebelgriff, ein Schlüssel oder dergleichen angeordnet sein kann, und als einen zweiten Türschildbereich eine Ansatzplatte auf, welche an der Längsseite der Grundplatte in Richtung zur Türkante anliegt. An einer Innenseite der Ansatzplatte als zweitem Türschildbereich und an der Außenfläche des Türblatts ist eine Schubplatte als Zuhaltung vertikal verstellbar angeordnet. Die über die Handhabe betätigbare Schubplatte steht in Wirkverbindung mit einer Riegelmechanik, die eine bevorzugt parallel und senkrecht zur Schubplatte angeordnete Schließstange, wenigstens ein Verriegelungselement und zweckmäßigerweise eine Stangenführung für die Schließstange sowie einen Mitnehmer als Verbindung zwischen Schubplatte und Schließstange aufweist. Durch eine Schließbewegung der Handhabe, deren Verstellung in einer vorteilhaften Ausbildung über einen als Schloßnuß wirkenden Zahnkranz oder ein Gelenkdornritzel und kämmende Zähne der Schubplatte auf den Mitnehmer der Schließstange als eine vertikale Bewegung übertragen wird, gelangt bei geschlossener Tür das wenigstens eine Verriegelungselement in einen form- und/oder kraftschlüssigen Eingriff mit der wenigstens einen schrank- oder gehäuseseitigen Aufnahme.

Besonders vorteilhaft ist die zweigeteilte Ausbildung des Türschildes durch eine raumsparende, nahezu formschlüssige Aufnahme des Zahnkranzes oder des Gelenkdornritzels und der Schubplatte in einem von der Grundplatte und der Ansatzplatte als ersten und zweiten Türschildbereich und einer Türaußenseite gebildeten, relativ flachen Zwischenraum und die zwischen Schubplatte und Schließstange ausgebildetete etwa 90-Grad-Umlenkung, welche die Verwendung eines schmalen Gegenanschlages, beispielsweise eines schmalen Profilrahmens bei Gehäusen und Schränken, ermöglicht. Dadurch wird ein größerer nutzbarer Innenraum für die Anordnung elektronischer und elektrischer Baugruppen erreicht. Weitere Vorteile sind die mögliche Anordnung einer Kabelhalterung und -führung an der Innenseite des schmalen Profilrahmens, aber auch eine bessere Luftzirkulation und Luftkühlung der Geräte- und Baugruppen in Schränken und schrankartigen Gehäusen.

Besondere Vorteile für eine kostengünstige Montage und Lagerhaltung in Bezug auf die Konstruktionsteile der Verschlußvorrichtung ergeben sich aus der geteilten, formschlüssig aneinandergrenzenden Ausbildung der Grundplatte und der Ansatzplatte als Türschildbereiche und der von diesen Türschildbereichen abgedeckten Teile, die eine wahlweise Anbringung der Verschlußvorrichtung in Abhängigkeit von einem rechts- oder linksseitigen Türanschlag ohne zusätzliche Teile und Anpassungarbeiten ermöglicht. Zu diesem Zweck ist die Schubplatte mit oberen und unteren Zähnen versehen, die eine rechts- und linksseitige Anordnung der Schubplatte, bezogen auf den mit der Handhabe betätigbaren Zahnkranz oder Gelenkdornritzel, durch eine einfache Umkehrung der Schubplatte ermöglichen.

In einer besonders vorteilhaften Weiterbildung der Erfindung weist ein auf einer Außenfläche eines Türblattes angeordnetes zweigeteiltes Türschild einen ersten Türschildbereich mit einer Grundplatte auf, an welcher als Handhabe ein Schwenkhebel angeordnet ist, welcher mit einem Zylinderschloß versehen sein kann. Um eine besonders zeit- und kostengünstige Montage der Vorrichtung zu ermöglichen, ist die Grundplatte im Bereich der Schwenkhebelachse und im Bereich des Zylinderschlosses mit in Aussparungen des Türblattes eingreifenden Halteblöcken versehen. Ein oberer Halteblock für das Gelenkdornritzel und ein unterer Halteblock, beispielsweise für ein Zylinderschloß, sind komplementär zu den bevorzugt rechteckigen Aussparungen des Türblattes, insbesondere eines Hutprofils ausgebildet. Das Hutprofil ist an der Innenseite des Türblatts angeordnet.

Diese Weiterbildung der erfindungsgemäßen Verschlußvorrichtung, welche eine besonders einfache Konstruktion aufweist, ist bevorzugt für Schränke und Gehäuse mit schmalen Gegenanschlägen geeignet und ermöglicht mit gleichen Bauteilen einen Einbau an rechts- und linksanschlagenden Türen. Eine nachträgliche Änderung der Anschlagseite ist mit einem besonders geringen Aufwand bei der Demontage und Montage der Verschlußvorrichtung verbunden.

Zur Befestigung sind Bohrungen in jedem Halteblock ausgebildet, die mit Öffnungen im Hutprofil fluchten, so daß mit Befestigungselementen, insbesondere Schrauben, die vom Hutprofil her eingeführt werden, eine sichere und stabile Befestigung der Grundplatte mit Schwenkhebel und Schließeinrichtung erreicht wird.

Um eine Abdichtung, beispielsweise eine IP-Dichtigkeit des Schrankes oder Gehäuses auch im Bereich der Verschlußvorrichtung zu gewährleisten, ist es zweckmäßig, wenigstens zwischen dem Hutprofil und den Halteblöcken bzw. der Grundplatte einen Dichtungsstreifen vorzusehen. Darüber hinaus kann auch eine Abdichtung im Bereich der Befestigungselemente bzw. der Öffnungen oder Bohrungen vorgenommen werden.

Zweckmäßigerweise weisen die Grundplatte und die an einer Längsseite der Grundplatte in Richtung zur Türkante anliegende Ansatzplatte eine symmetrische Ausbildung auf, die in Verbindung mit der ebenfalls symmetrisch ausgebildeten Schubplatte eine wahlweise Anbringung der Verschlußvorrichtung in Abhängigkeit von einem rechts- oder linksseitigen Türanschlag ohne zusätzliche Teile und Anpassungsarbeiten ermöglicht.

Sinnvollerweise ist der erste Türschildbereich, d.h. die Grundplatte, symmetrisch zu ihrer Längsachse und die Ansatzplatte als zweiter Türschildbereich symmetrisch zu ihrer Querachse ausgebildet.

Bei einer nachträglichen Änderung der Anschlagseite kann aufgrund dieser symmetrischen Ausbildungen die Grundplatte als Einheit demontiert und nach Umkehrung der Tür wieder eingebaut werden. Dazu werden die in die Halteblöcke des Grundprofils eingreifenden Befestigungsschrauben vom Hutprofil gelöst. Danach wird die gesamte Tür, beispielsweise mit türseitigen Scharnierteilen, und mit der Ansatzplatte um die obere oder untere Türkante um 180° gedreht und die komplette Grundplatte wieder mit den Halteblöcken in die Aussparungen eingesetzt und fixiert.

Wenn gemäß einer besonders bevorzugten Ausbildung die Aussparungen im Hutprofil der Tür und auch die komplementär ausgebildeten Halteblöcke der Grundplatte identisch ausgebildet sind, ist ein mit einer Selbstzentrierung verbundener Einbau besonders einfach und schnell durchführbar.

Es ist vorteilhaft, daß für eine wechselseitige Anordnung dieser bevorzugten Verschlußvorrichtung lediglich zwei Aussparungen in der Tür vorhanden sein müssen, in die die Grundplatte eingebaut und ausgerichtet werden kann, ohne daß zusätzliche Anpassungselemente benötigt werden.

Es besteht die Möglichkeit, die Halteblöcke komplementär zum Hutprofil auszubilden. Ebenso können Halteblöcke, die geringere Abmessungen aufweisen, mit Kappen versehen werden. Diese werden beispielsweise am Hutprofil befestigt, so daß die Halteblöcke nahezu eingepaßt und danach verschraubt werden können. Die Kappen können auch von der Innenseite der Tür her als Abdeckung auf die Halteblöcke aufgebracht werden.

Ein Mitnehmer, der sich zweckmäßigerweise über nahezu die gesamte Länge der Ansatzplatte erstreckt und über Verbindungsbereiche mit der Schließstange verbunden sein kann, greift mit einer Nase in eine Ausnehmung der Schubplatte ein, so daß deren vertikale Verstellbewegungen auf den Mitnehmer und die Schließstange übertragen werden.

Die Schließstange, die wie der parallel angeordnete Mitnehmer senkrecht zur Schubplatte und zur Türfläche angeordnet ist, reicht über den Türschildbereich hinaus und ist stabil und einstellbar in mindestens einer Stangenführung gehalten. Eine Stangenführung kann beispielsweise als ein Führungsblock mit einer dem Querschnitt der Schließstange angepaßten Ausnehmung ausgebildet sein. Bevorzugt weist die Schließstange einen rechteckigen Querschnitt auf.

Unter dem Aspekt der rechts- und linksseitigen Anbringung einer Verschlußvorrichtung ist es zweckmäßig, die Führungsblöcke lösbar und verschiebbar an der Türinnenseite zu befestigen.

Zur Realisierung einer funktionssicheren Verriegelungsstellung ist vorgesehen, daß wenigstens ein Verriegelungselement, welches beispielsweise von zwei horizontal und beiderseits der Schließstange angeordneten Riegelelementen, insbesondere von zwei Rollen, und der Schließstange in diesem Bereich gebildet sein kann, von einer komplementär ausgebildeten schrank- oder gehäuseseitigen Aufnahme form- und/ oder kraftschlüssig gehalten wird. In einer vorteilhaften Verschlußvorrichtung sind ein oberes und ein unteres Verriegelungselement und entsprechende Aufnahmen, die beispielsweise in einer T-Nut eines Hohlprofils lösbar und verschiebbar befestigt sein können, vorgesehen. Eine derartige Ausbildung erhöht aufgrund des Abstandes zwischen den Verriegelungselementen die Stabilität des Türverschlusses. In einer zweckmäßigen Ausbildung besteht eine gehäuse- oder schrankseitige Aufnahme aus einem doppelhakenförmigen Bauelement, welches eine zur Schließstange gerichtete Abstandsöffnung sowie vertikal angeordnete Keilflächen zur gerichteten Einführung des Verriegelungselementes aufweist. Zweckmäßigerweise sind die Keilflächen im oberen und unteren Bereich ausgebildet, weshalb zwei beidseitig der Schließstange angeordnete Riegelelemente, insbesondere Rollen, zur Öffnungstellung nach oben und unten bewegt werden können.

Um eine möglichst geräuscharme Ver- und Entriegelung zu erreichen, ist es sinnvoll, wenigstens Bereiche der Verriegelungseinrichtung und der Stangenführung aus einem Kunststoffmaterial herzustellen.

In einer vorteilhaften Ausgestaltung sind das Türschild, insbesondere die Grundplatte, und die Handhabe, bevorzugt ein Schwenkhebel, ergonomisch gestaltet. Beispielsweise kann der Schwenkhebel nahezu formschlüssig vom äußeren Türschildbereich aufgenommen sein.

Es ist sinnvoll, eine Schließeinrichtung, beispielsweise einen Schließzylinder, in der Verschlußvorrichtung vorzusehen, der im Schwenkhebel oder in einer den Schwenkhebel aufnehmenden Mulde des äußeren, ersten Türschildbereiches angeordnet sein kann. Es wird nach der ersten Variante eine Sicherung der Tür und des Schwenkhebels erreicht.Dagegen kann nach der zweiten Variante ein bis oberhalb des Schließzylinders reichender Schwenkhebel bei verschlossener Tür aus seiner formschlüssigen und gegebenenfalls einrastbaren Aufnahme bewegt werden.

Die Erfindung wird nachstehend anhand einer Zeichnung weiter beschrieben; in dieser zeigen in einer schematischen Darstellung:
- Fig. 1: eine Ansicht einer ersten Variante einer erfindungsgemäßen Verschlußvorrichtung im Bereich eines auf einer Türaußenseite angeordneten Türschildes;
- Fig. 2: eine schematisierte Gesamtansicht einer Weiterbildung einer erfindungsgemäßen Verschlußvorrichtung mit einer alternativen Türschildgestaltung;
- Fig. 3: einen Vertikalschnitt entlang der Linie III-III in Fig. 1;
- Fig. 4: eine Innenansicht eines Türschildes gemäß Fig. 1;
- Fig. 5: einen Querschnitt entlang der Linie V-V in Fig. 2;
- Fig. 6: einen Querschnitt im Bereich einer Stangenführung entlang der Linie VI-VI in Fig. 2;
- Fig. 7: eine Ansicht einer Stangenführung nach Pfeil VII in Fig. 6;
- Fig. 8: einen Querschnitt eines Führungsblockes ohne Schließstange;
- Fig. 9: eine Seitenansicht eines Führungsblockes nach Pfeil IX in Fig. 8;
- Fi. 10: einen Querschnitt der erfindungsgemäßen Verschlußvorrichtung im Bereich einer schrank- oder gehäuseseitigen Aufnahme entlang der Linie X-X in Fig. 2;
- Fig. 11: eine Draufsicht auf eine Aufnahme ohne Verriegelungselement;
- Fig. 12: eine Ansicht einer schrank- oder gehäuseseitigen Aufnahme;
- Fig. 13: eine Seitenansicht nach Pfeil XIII in Fig. 11;
- Fig. 14: eine Ansicht einer weiteren Varinate einer erfindungsgemäßen Verschlußvorrichtung mit zweigeteiltem Türschild und
- Fig. 15: einen Vertikalschnitt entlang der Linie XV-XV in Fig. 14.

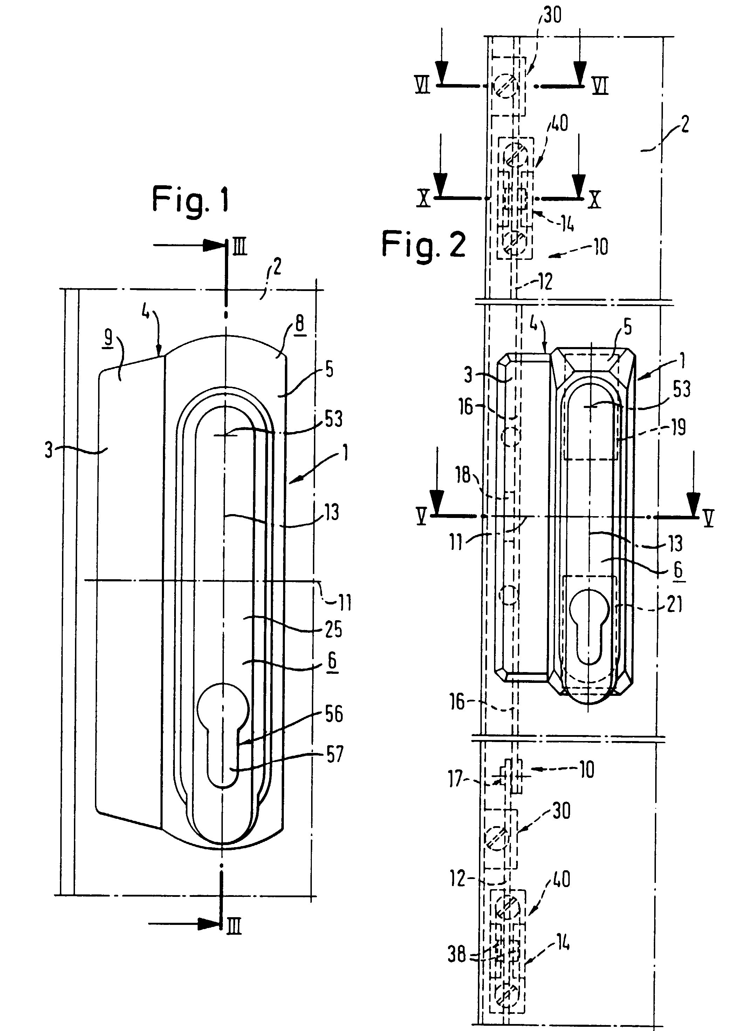

Fig. 1 zeigt in einer Ansicht ausschnittsweise eine Tür 2 mit einer erfindungsgemäßen Verschlußvorrichtung 1. An der Außenfläche der Tür 2 ist ein Türschild 4 angebracht. Das Türschild 4 ist in Längsrichtung zweigeteilt ausgebildet und weist als einen ersten Türschildbereich 8 eine Grundplatte 5 und als zweiten Türschildbereich 9 eine Ansatzplatte 3 auf. Als Handhabe 6 ist ein Schwenkhebel 25 im Bereich der Grundplatte 5 angeordnet, der in der dargestellten Verschlußstellung über eine schlüsselbetätigbare Schließeinrichtung 56, beispielsweise ein Zylinderschloß 57, gesichert werden kann. Die dargestellte linksanschlagende Tür 2 kann nach Ausbau der Grundplatte 5, Verschwenken der Tür 2 mit verbliebener Ansatzplatte 3 und nachfolgendem Wiedereinbau der Grundplatte längs der Ansatzplatte 3 ohne besonderen Aufwand zu einer rechtsanschlagenden Tür umgebaut werden.

Zu diesem Zweck ist die Ansatzplatte 3 symmetrisch zu ihrer horizontalen Achse 11 und die Grundplatte 5 symmetrisch zu ihrer Längsachse 13 ausgebildet.

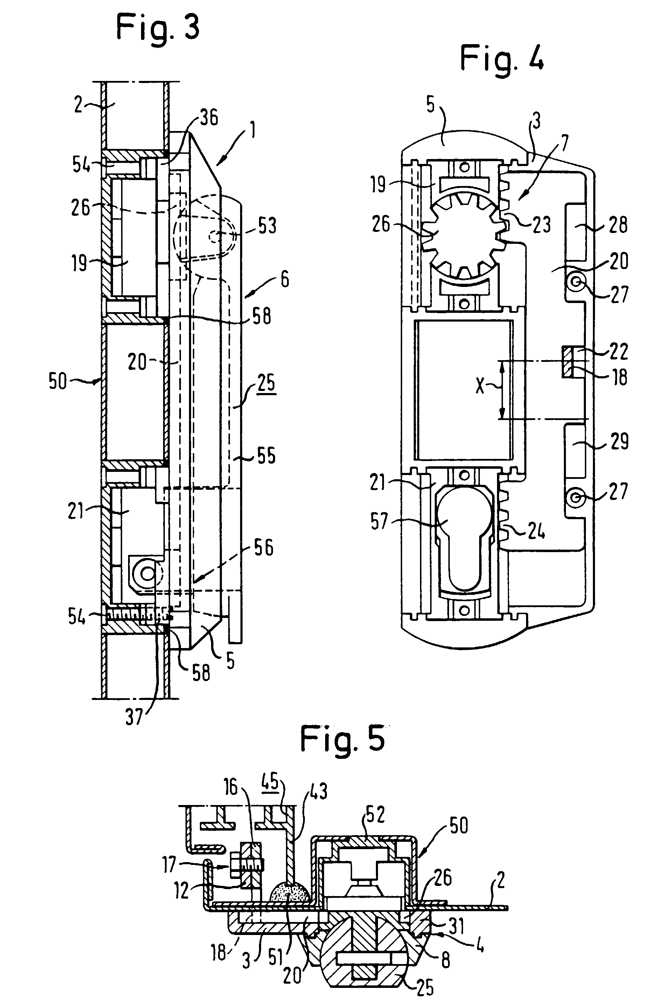

In einer bevorzugten Ausbildungsform der erfindungsgemäßen Verschlußvorrichtung sind an der Grundplatte 5 im Bereich der Schwenkhebelachse 53 und im Bereich des Zylinderschlosses 57 in Aussparungen 36,37 eines türseitigen Hutprofils 50 (siehe Fig. 3 und 5) eingreifende Halteblöcke 19,21 ausgebildet, die in Fig. 2 strichliert dargestellt sind.

Wenn zur Änderung der Anschlagseite einer Tür die Verschlußvorrichtung verändert werden muß, ist lediglich ein Ausbau der kompletten Grundplatte 5 erforderlich. Nach Umkehrung der Tür 2 über eine obere oder untere Kante befindet sich die Ansatzplatte 3 rechts der wieder eingesetzten Grundplatte 5. Vorteilhafterweise sind die Aussparungen 36,37 und auch die Halteblöcke 19,21 identisch ausgebildet, so daß die Grundplatte mit den Halteblöcken wahlweise befestigt werden kann.

In Fig. 2 ist in einer stark schematisierten Weise eine Gesamtansicht einer erfindungsgemäßen Verschlußvorrichtung 1 im Teilschnitt dargestellt, aus der die Anordnung und Ausbildung einer Riegelmechanik 10 auf einer Innenseite einer Tür 2 hervorgehen. Die Riegelmechanik 10 weist im Bereich der Ansatzplatte 3 des Türschildes 4 einen stangenförmig ausgebildeten Mitnehmer 16 auf, der über eine Nase 18 mit einer Schubplatte 20 (Fig. 3 bis 5) in Verbindung steht und mit dieser Schubplatte 20 in vertikaler Richtung verstellt wird. Eine Schließstange 12 verläuft ober- und unterhalb des Türschildes 4 parallel zum Mitnehmer 16 und liegt in Verbindungsbereichen, von denen lediglich der untere Verbindungsbereich 17 dargestellt ist, flächig am Mitnehmer 16 an. Die Schließstange 12 ist wie der Mitnehmer 16 senkrecht zur Innenseite der Tür 2 und zur Ansatzplatte 3 angeordnet.

In einer weiteren Ausführungsform können der Mitnehmer 16 und/oder die Schließstange 12 auch parallel zur Innenfläche des Türblattes angeordnet sein. Wesentlich ist eine rechtwinklige Anordnung von Schubplatte 20 und Mitnehmer 16 mit Schließstange 12.

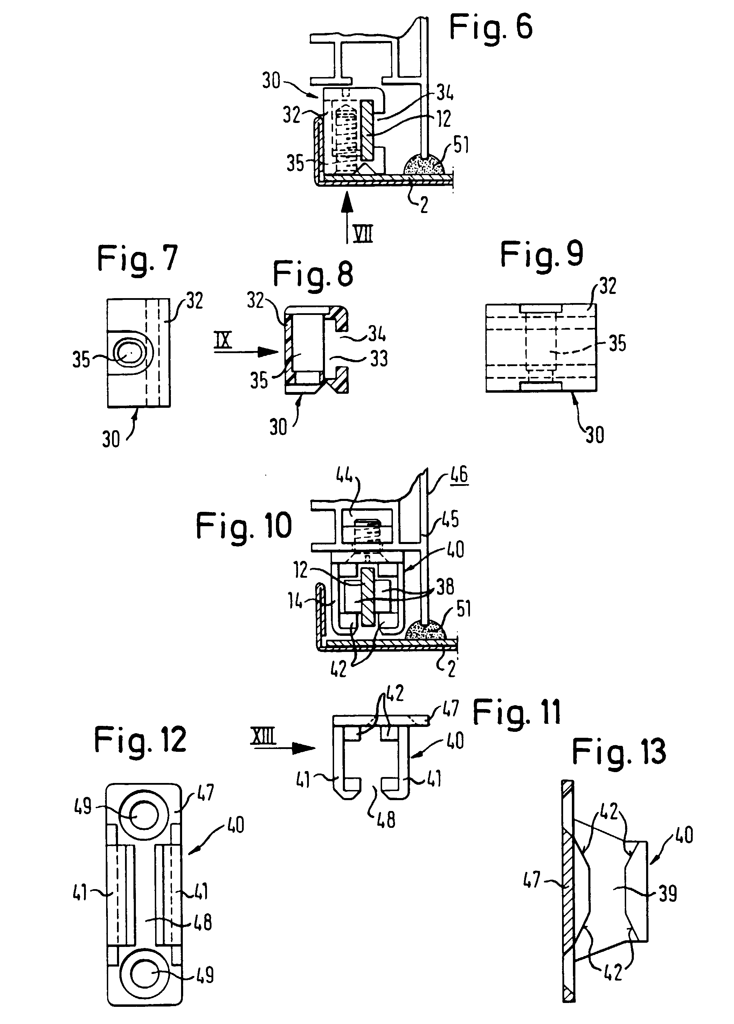

Zur stabilen und kontrollierten Halterung ist die Schließstange 12 in einer ober- und unterhalb des Türschildes 4 an der Innenseite der Tür befestigten Stangenführung 30 aufgenommen, die im Zusammenhang mit den Fig. 6 bis 9 beschrieben wird. Eine Schließstellung der Verschlußvorrichtung wird erreicht, wenn wenigstens ein Verriegelungselement 14, welches zwei beidseitig der Schließstange 12 gelagerte Rollen 38 aufweist, mit wenigstens einer schrank- oder gehäuseseitig angeordneten Aufnahme 40 in Eingriff gelangt. Die Ausbildung einer Aufnahme 40 und das Zusammenwirken mit dem Verriegelungselement 14 ist aus den Fig. 10 bis 13 ersichtlich.

Insbesondere aus Fig. 2 und Fig. 5 geht hervor, daß infolge der senkrecht zur Türinnenseite angeordneten Schließstange 12 eine funktionssichere Zuhaltung und Verriegelung in wenigstens einer besonders schmal ausgebildeten schrankseitigen Aufnahme 40 erfolgt, so daß auch relativ schmale vertikale Räume bzw. Profilrahmen für Schränke und Gehäuse verwendet werden können.

Die dargestellte Verschlußvorrichtung 1 ist mit zwei Verriegelungselementen 14 und schrankseitigen Aufnahmen 40 versehen, die in einem entsprechenden Abstand voneinander angeordnet sind und einen stabilen Türverschluß gewährleisten.

Fig. 3 bis 5 zeigen Ausbildung und Anordnung des zweigeteilten Türschildes 4, einer als Zuhaltung 7 eingesetzten Schubplatte 20 sowie das Zusammenwirken von Schwenkhebel 25, Gelenkdornritzel 26 und Schubplatte 20 im Bereich des zweigeteilten Türschildes und an der Außenfläche des Türblattes. Es werden für identische Merkmale gleiche Bezugszeichen verwendet. Eine Schließ- oder Öffnungsbewegung wird durch den als Handhabe 6 an der Grundplatte 5 des ersten Türschildbereichs 8 gelagerten Schwenkhebel 25 ausgelöst, der in einem Griffbereich 55 als eine mit der Grundplatte 5 zusammenwirkende Schließeinrichtung 56 ein Zylinderschloß 57 aufweist.

Fig. 3 zeigt die nahezu formschlüssige Aufnahme des Schwenkhebels 25 an der Grundplatte 5 sowie die Befestigung der Verschlußvorrichtung 1 in einem Hutprofil 50, welches an der Innenseite der Tür 2 angeordnet ist und zur Verstärkung der Tür 2 in diesem Bereich dient.

In einer besonders bevorzugten Ausbildung weist die Grundplatte 5 im Bereich der Schwenkhebelachse 53 einen oberen Halteblock 19 und im Bereich der Schließeinrichtung 56 einen unteren Halteblock 21 auf, welche in eine obere bzw. untere Aussparung 36,37 des Hutprofils 50 unter Selbstzentrierung der Verschlußvorrichtung 1 einsetzbar und lösbar zu befestigen sind.

Zur Befestigung dienen Befestigungselemente, insbesondere Schrauben 54, die in Bohrungen des Hutprofils 50 und der Halteblöcke 19,21 eingeschraubt werden. Zur Abdichtung des Schrankes oder Gehäuses zwischen den Haltblöcken 19,21 bzw. der Grundplatte 5 und dem Hutprofil 50 wird eine Dichtung 58 angeordnet, wodurch zumindest eine IP-Dichtigkeit im Bereich der Verschlußvorrichtung gewährleistet wird.

Bevorzugt bilden die Halteblöcke 19,21 und die Grundplatte 5 mit Gelenkdornritzel 26, Schwenkhebelachse 53 bzw. Zylinderschloß 57 eine Einheit. Es kann vorteilhaft sein, die Halteblöcke 19,21 lösbar mit der Grundplatte 5 zu verbinden, um beispielsweise nach Bedarf Schließeinrichtungen und/oder Zuhaltungen zu verwenden und ein leichtes Auswechseln der Bauteile zu ermöglichen.

Ein Schließen oder Öffnen der Verschlußvorrichtung 1 erfolgt, wenn der Schwenkhebel 25 aufgeschwenkt und das im Bereich der Schwenkachse 53 angeordnete Gelenkdornritzel 26, welches als Schloßnuß dient, entsprechend verstellt wird. Die Verstellbewegung im Uhrzeigersinn oder entgegen dem Uhrzeigersinn wird durch obere, kämmende Zähne 23 der Schubplatte 20 in eine vertikale Bewegung umgesetzt und über den Mitnehmer 16 auf die Schließstange 12 und das an der Schließstange 12 angeordnete, wenigstens eine Verriegelungselement 14 übertragen.

Eine Innenansicht gemäß Fig. 4 und ein Querschitt gemäß Fig. 5 zeigen die raumsparende, formschlüssige Aufnahme der Schubplatte 20 in einem von der Ansatzplatte 3 und der Tür 2 gebildeten Zwischenraum. Die Verbindung zwischen der Schubplatte 20 und der Riegelmechanik 10 mit Schließstange 12 erfolgt über eine Nase 18, die am Mitnehmer 16 ausgebildet ist und die in eine seitliche Ausnehmung 22 der Schubplatte 20 eingreift oder lösbar befestigt ist. Eine vom Schwenkhebel 25 über das Gelenkdornritzel 26 bewirkte vertikale Verstellung der Schuplatte 20, beispielweise eine Hubbewegung, ist in Fig. 4 mit X bezeichnet. Für die Verstellbewegung der Nase 18 des Mitnehmers 16 ist in der Tür 2 eine entsprechend bemessene Ausnehmung 22 vorgesehen.

Die Schubplatte 20 ist wie die Ansatzplatte 3, die Grundplatte 5 mit Halteblöcken 19,21 und die Tür 2 mit Aussparungen 36,37 für einen rechts- und linksseitigen Türanschlag ausgebildet und weist neben oberen Zähnen 23 untere Zähne 24 auf. Nach einer Umkehrung der Tür 2, bei der die Ansatzplatte 3, die Schubplatte 20 und gegebenenfalls auch der Mitnehmer 18 an der Tür 2 verbleiben, gelangen die in Fig. 4 mit 24 bezeichneten unteren Zähne nach oben und in den Eingriffsbereich des Gelenkdornritzels 26. Es ist vorteilhaft, daß nur die Grundplatte 5 mit Halteblöcken 19,21 und mit den Einbauteilen um 180° gedreht werden muß, was aufgrund der identischen Ausbildung der Halteblöcke 29,21 und der Aussparungen 36,37 einfach und schnell durchgeführt werden kann.

Die Ansatzplatte 3 wird mit Befestigungselementen 27, beispielsweise Schrauben an der Tür 2 befestigt. Zur ungehinderten Schließbewegung sind vertikale, beispielsweise rechteckförmige Ausnehmungen 28,29 an der Schubplatte 20 vorgesehen.

Der Querschnitt gemäß Fig. 5 verdeutlicht das Zusammenwirken des Schwenkhebels 25 als Handhabe, des Gelenkdornritzels 26 oder eines Zahnkranzes und der Schubplatte 20 mit der Riegelmechanik 10, insbesondere mit der Nase 18 des Mitnehmers 16 und der Schließstange 12. Wesentlich für die erfindungsgemäße Ausbildung der Verschlußvorrichtung ist die 90° Umlenkung der Schließbewegung, die durch die rechtwinklige Anordnung der Schließstange 12 mit Mitnehmer 16 und Nase 18 im Vergleich zur Schubplatte 20 ermöglicht ist. In Fig. 5 ist eine Schraubverbindung in einem Verbindungsbereich 17 zwischen der im Querschnitt rechteckigen Schließstange 12 und dem flächig anliegenden Mitnehmer 16 dargestellt. Zur besseren Übersicht enthält Fig. 5 nicht eine an einem vertikalen Hohlprofil 45 befestigte Aufnahme 40, in welche ein ebenfalls nicht dargestelltes Verriegelungselement 14 (Fig. 10 bis Fig. 13) in der in Fig. 5 gezeigten Schließstellung der Tür 2 aufgenommen ist. In dieser Schließstellung liegt eine an einem Außenschenkel 43 des Hohlprofils 45 angeordnete Dichtung, beispielsweise eine elastomere IP-Dichtung 51, an einer Innenseite der Tür 2 an. Fig. 5 veranschaulicht auch besonders deutlich die zweigeteilte Ausbildung des Türschildes 4 sowie die mögliche wechselseitige Anordnung der Ansatzplatte 3 als zweitem Türschildbereich rechts oder links von der Grundplatte 5 als ersten Türschildbereich. In einer konstruktiv besonders einfachen Weise können spaltförmige Öffnungen an der jeweils nicht benutzten Längsseite der Grundplatte 5 mit Füllelementen 31 oder einer Verblendung abgedeckt bzw. abgedichtet werden.

In Fig. 6 ist ein Führungsblock 32 einer Stangenführung 30 im Querschnitt gezeigt. Der Führungsblock 32 ist an einer Innenseite der Tür 2 über einen angeschweißten Bolzen 35 befestigt und nahezu U-förmig ausgebildet. Die in einer vertikalen Ausnehmung 33 geführte Schließstange 12 kann über eine Einführöffnung 34 eingeführt werden und wird in Art eines Filmscharniers in insbesondere aus Kunststoff hergestellten Führungsblöcken 32 geführt. Es ist zweckmäßig, für eine Schließstange 12 wenigstens zwei im Abstand voneinander an der Innentür angeordnete Führungsblöcke 32 vorzusehen, um eine sichere und kontrollierte Schließbewegung der Schließstange 12 zu gewährleisten.

Die eigentliche Verriegelung erfolgt mit Hilfe der in den Fig. 10 bis 13 dargestellen schrankseitigen Aufnahme 40 und einem Verriegelungselement 14, welches aus zwei horizontal und beidseitig der Schließstange 12 angeordneten Rollen 38 bestehen kann. Die Rollen 38 sind mit einer entsprechenden Befestigung und gegebenenfalls drehbar an der Schließstange 12 angeordnet und aus einem Kunststoffmaterial hergestellt. Die schrankseitige Aufnahme 40 umfaßt zwei hakenförmige Elemente 41, die spiegelbildlich zueinander in Art eines Doppelhakens an einem Befestigungsflansch 47 angeordnet sind. Eine lösbare und verschiebbare Befestigung erfolgt vorteilhafterweise über Befestigungselemente 49, beispielsweise über Schrauben, in einer Ausnehmung, beispielsweise einer T-Nut 44 eines vertikalen Hohlprofils 45 eines Rahmengestells 46. Beim Schließvorgang gelangt die Schließstange 12 über eine schlitzförmige Abstandsöffnung 48 der schrankseitigen Aufnahme 40 in den Bereich der Doppelhaken 41. Um eine gerichtete Einführung des Verriegelungselementes 14 zu sichern, sind obere und untere, vertikal ausgerichtete Keilflächen 42 am Doppelhaken ausgebildet, über die die Rollen 38 des Verriegelungselementes 14 bis in eine Verriegelungsstellung in einem zentralen Bereich 39 gelangen. Eine Einführung der Verriegelungselemente 14 in eine Aufnahme 40 kann sowohl von oben als auch von unten bewerkstelligt werden. Die konstruktive Ausbildung der Doppelhaken 41 als schrankseitige Aufnahmen 40 ermöglicht ebenfalls eine wahlweise links- oder rechtsseitige Befestigung, was in gleichem Maße für die Führungsblöcke 32 der Stangenführung 30 gilt.

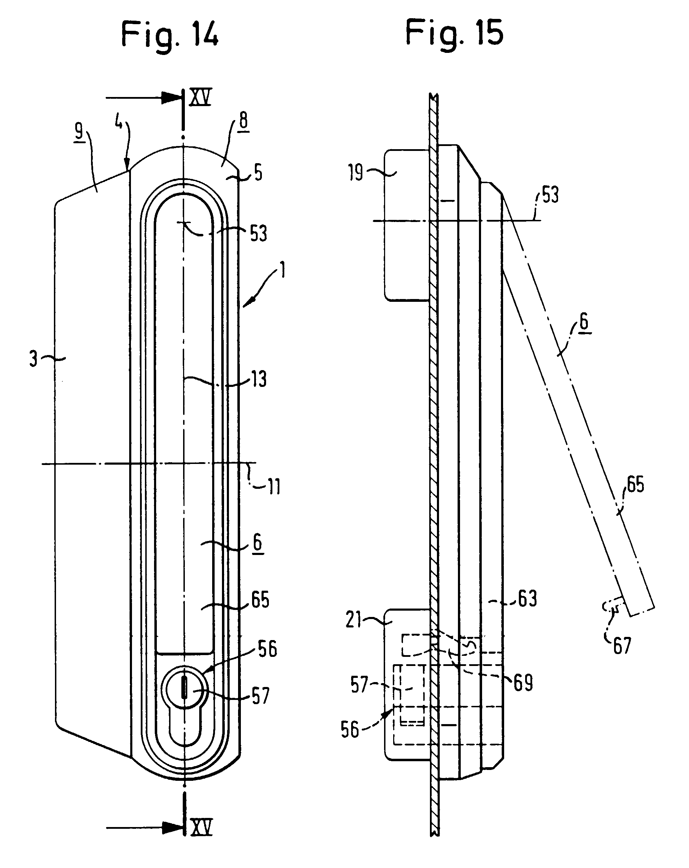

Fig. 14 zeigt in einer Ansicht eine weitere Variante einer erfindungsgemäßen Verschlußvorrichtung 1. Gleiche Merkmale sind mit identischen Bezugszeichen versehen. Bei dieser Ausbildungsvariante ist an einem ersten Türschildbereich 8 mit einer Grundplatte 5 als Handhabe 6 ein verkürzt ausgebildeter Schwenkhebel 65 angeordnet. Der Schwenkhebel 65 endet oberhalb einer Schließeinrichtung 56, insbesondere oberhalb eines Zylinderschlosses 57, welches in einem unteren Halteblock 21 aufgenommen ist. Der Schwenkhebel 65 ist in Verschlußstellung in einer muldenförmigen Ausnehmung 63 der Grundplatte 5 aufgenommen und kann zur Betätigung eines im Bereich der Schwenkachse 53 angeordneten Gelenkdornritzels (siehe Fig. 3 bis 5) aufgeschwenkt werden (siehe Fig. 15). Zweckmäßig ist eine einrastbare Verriegelungsstellung des verkürzten Schwenkhebels 65. Die Raststellung wird durch ein Rastelement 67 im unteren Bereich des Schwenkhebels 65 erreicht, welches mit einem hebelartigen Gegenhalter 69 im Bereich des unteren Halteblocks 21 zusammenwirkt.

## Patentansprüche

1. Verschlußvorrichtung für Türen von Gehäusen oder Schränken, mit einer im Bereich eines Türschildes (4) mit Hilfe einer Handhabe (6) und mit einer Zuhaltung (7) betätigbaren Riegelmechanik (10) und mit wenigstens einer gehäuse- oder schrankseitigen Aufnahme (40) für ein Verriegelungselement (14),
dadurch **gekennzeichnet,**
daß das Türschild (4) zweigeteilt ist und einen die Handhabe (6) aufnehmenden ersten Türschildbereich (8) und einen zweiten Türschildbereich (9) aufweist,
daß an einer Innenseite des zweiten Türschildbereiches (9) als Zuhaltung (7) eine vertikal verstellbare Schubplatte (20) für die Riegelmechanik (10) angeordnet ist,
daß die Riegelmechanik (10) eine in Wirkverbindung mit der Schubplatte (20) stehende, insbesondere rechtwinklig angeordnete Schließstange (12) aufweist, die mittels der Schubplatte (20) betätigbar ist, und
daß an der Schließstange (12) das wenigstens eine Verriegelungselement (14) angeordnet ist, welches in Schließstellung in der wenigstens einen schrankseitigen Aufnahme (40) gehalten ist.

2. Verschlußvorrichtung nach Anspruch 1,
dadurch **gekennzeichnet,**
daß die Schubplatte (20) sowie der erste und zweite Türschildbereich (8, 9) für einen links- und rechtsseitigen Türanschlag ausgebildet sind und daß die Schubplatte (20) mit oberen und unteren Zähnen (23, 24) versehen ist, welche einen Zahnkranz oder ein Gelenkdornritzel (26) der Handhabe (6) kämmen.

3. Verschlußvorrichtung für Türen von Gehäusen oder Schränken, mit einem Türschild (4), welches einen Schwenkhebel (25) als Handhabe (6) und Ausformungen zum Eingriff in türseitige Aussparungen aufweist, wobei eine obere Aussparung im Bereich einer Schwenkhebelachse (53) und eine untere Aussparung im Bereich einer Schließeinrichtung (56) ausgebildet ist, nach Anspruch 1 oder 2,
dadurch **gekennzeichnet,**
daß der erste Türschildbereich (8) von einer Grundplatte (5) gebildet ist, deren Ausformungen als obere und untere Halteblöcke (19, 21) in Aussparungen (36, 37) eines Türblattes (2) fixierbar sind,
daß als zweiter Türschildbereich (9) eine Ansatzplatte (3) ausgebildet ist, an deren Innenseite als Zuhaltung (7) eine vertikal verstellbare Schubplatte (20) gelagert ist, und
daß die Grundplatte (5) zu einer Längsachse (13) symmetrisch ausgebildet und wahlweise längs der Ansatzplatte (3) anzuordnen ist.

4. Verschlußvorrichtung nach Anspruch 3,
dadurch **gekennzeichnet,**
daß der obere Halteblock (19) der Grundplatte (5) im Bereich der Schwenkhebelachse (53) und des Gelenkdornritzels (25) angeordnet und identisch zum unteren Halteblock (21) ausgebildet ist und
daß im Bereich des unteren Halteblocks (21) ein Zylinderschloß (57) als Schließeinrichtung (56) angeordnet ist.

5. Verschlußvorrichtung nach Anspruch 3 oder 4,
dadurch **gekennzeichnet,**
daß der obere und untere Halteblock (19, 21) der Grundplatte (5), welche in Aussparungen (36, 37) eines Hutprofils (50) des Türblattes (2) gehalten sind, komplementär zu den Aussparungen (36, 37) und insbesondere rechteckförmig ausgebildet sind und
daß zur Befestigung der Halteblöcke (19, 21) Befestigungselemente (54) vom Hutprofil (50) des Türblattes (2) her einführbar sind.

6. Verschlußvorrichtung nach einem der Ansprüche 3 bis 5,
dadurch **gekennzeichnet,**
daß die Halteblöcke (19, 21) mit Kappen (52) versehen und in den Aussparungen (36, 37) fixierbar sind, und daß die Kappen (52) zur Abdichtung des oberen und unteren Halteblocks (19, 21) im Bereich des Türblattes (2) angeordnet sind.

7. Verschlußvorrichtung nach Anspruch 6,
dadurch **gekennzeichnet,**
daß die Halteblöcke (19, 21) mit den Kappen (52) und mit einer Dichtung (58) abdichtbar sind.

8. Verschlußvorrichtung nach einem der vorhergehenden Ansprüche,
dadurch **gekennzeichnet,**
daß die Schubplatte (20), welche über den Schwenkhebel (25) und das Gelenkdornritzel (26) betätigbar ist,
in Wirkverbindung mit einer senkrecht zur Schubplatte (20) angeordneten Schließstange (12) steht und daß im Bereich des Türschildes (4) ein Mitnehmer (16) mit der Schließstange (12) verbunden ist.

9. Verschlußvorrichtung nach einem vorhergehenden Ansprüche,
dadurch **gekennzeichnet,**
daß das Gelenkdornritzel (26) über kämmende Zähne (23, 24) der Schubplatte (20) mit dem Mitnehmer (16) und der Schließstange (12) verbunden ist, und
daß das Gelenkdornritzel (26) und die Schubplatte (20) nahezu formschlüssig von der Grundplatte (5) oder der Ansatzplatte (3) aufgenommen sind.

10. Verschlußvorrichtung nach einem der vorhergehenden Ansprüche,
dadurch **gekennzeichnet,**
daß der Mitnehmer (16) an der Innenseite der Tür (2) und im Bereich der Ansatzplatte (3) verstellbar und über Verbindungsbereiche (17) mit der Schließstange (12) verbunden ist, und
daß der Mitnehmer (16) mit einer Nase (18) in einer Ausnehmung (22) der rechtwinklig verlaufenden Schubplatte (20) geführt ist.

11. Verschlußvorrichtung nach einem der vorhergehenden Ansprüche,
dadurch **gekennzeichnet,**
daß wenigstens eine Stangenführung (30) vorgesehen ist, die die Schließstange (12) ober- und/oder unterhalb des Mitnehmers (16) aufnimmt, und
daß jede Stangenführung (30) einen an der Innenseite der Tür (2) befestigten Führungsblock (32) aufweist, welcher mit einer komplementär zum Querschnitt der Schließstange (12) ausgebildeten vertikalen Ausnehmung (33) versehen ist.

12. Verschlußvorrichtung nach Anspruch 11,
dadurch **gekennzeichnet,**
daß der Führungsblock (32), der etwa U-förmig ausgebildet ist, eine Einführöffnung (34) für die Schließstange (12) aufweist und an der Tür (2) lösbar und verschiebbar zu befestigen ist.

13. Verschlußvorrichtung nach einem der vorhergehenden Ansprüche,
dadurch **gekennzeichnet,**
daß Rollen (38) beiderseits an der Schließstange (12) angeordnet sind und mit der Schließstange (12) das Verriegelungselement (14) bilden und
daß die schrankseitige Aufnahme (40) komplementär ausgebildete und vertikale Keilflächen (42) aufweist, in die das Verriegelungselement (14) in Verschlußstellung eingreift.

14. Verschlußvorrichtung nach einem der vorhergehenden Ansprüche,
dadurch **gekennzeichnet,**
daß die schrankseitigen Aufnahmen (40), die in einer T-Nut (44) eines vertikalen Hohlprofils (45) eines Schrank- oder Gehäuserahmens (46) fixierbar sind, als Doppelhaken (41) mit einer zur Tür (2) gerichteten Abstandsöffnung (48) für die Schließstange (12) ausgebildet sind.

15. Verschlußvorrichtung nach einem der vorhergehenden Ansprüche,
dadurch **gekennzeichnet,**
daß die Schubplatte (20) mit Befestigungselementen (27) an der Ansatzplatte (3) befestigt ist, und daß im Bereich der Befestigungselemente (27) vertikale Ausnehmungen (28, 29) ausgebildet sind.

16. Verschlußvorrichtung nach Anspruch 3,
dadurch **gekennzeichnet,**
daß als Handhabe (6) ein Schwenkhebel (25) an der Grundplatte (5) angeordnet ist, der in Verschlußstellung formschlüssig von der Grundplatte (5) aufgenommen ist.

17. Verschlußvorrichtung nach Anspruch 16,
dadurch **gekennzeichnet,**
daß der Schwenkhebel (25) über eine Schließeinrichtung (56) verschließbar ist und daß ein Zylinderschloß (57) im unteren Halteblock (21) angeordnet ist.

18. Verschlußvorrichtung nach Anspruch 16,
dadurch **gekennzeichnet,**
daß ein verkürzter Schwenkhebel (65) vorgesehen ist, der über ein Rastelement (67) und einen Gegenhalter (69) in einer muldenförmigen Ausnehmung (63) der Grundplatte (5) fixierbar ist.

19. Verschlußvorrichtung nach Anspruch 18,
dadurch **gekennzeichnet,**
daß der Gegenhalter (69) hebelartig ausgebildet und im Bereich des unteren Halteblocks (21) angeordnet ist.

## Claims

1. Locking device for doors of cabinets or cupboards, with a bolt mechanism (10) operable with the aid of a handle (6) and a tubler (7) in the vicinity of a door plate (4) and with at least one cupboard or cabinetside receptacle (40) for a locking element (14),
**characterized** in that
the door plate (4) is bipartite and has a first door plate area (8) receiving a handle (6) and a second door plate area (9),
that on one inside of the second door plate area (9) is located as a tumbler (7) a vertically adjustable sliding plate (20) for the bolt mechanism (10),
that the bolt mechanism (10) comprises a locking rod (12) which is operatively connected with the sliding plate (20) and operable by means of the latter and which is in particular orthogonally arranged and that on the locking rod (12) is located the at least one locking element (14), which in closed position is held in the at least one cupboard-side receptacle (40).

2. Locking device according to claim 1,
**characterized** in that
the sliding plate (20), as well as the first and second door plate area (8, 9) are constructed for left and right-side door fixing and that the sliding plate (20) is provided with upper and lower teeth (23, 24), which mesh with a toothed wheel or a hinge-pinion (26) of the handle (6).

3. Locking device for doors of cabinets or cupboards, with a door plate (4), which has a rocking lever (25) as the handle (6) and shapes for engaging in door-side recesses, an upper recess being formed in the vicinity of a rocking lever axis (53) and a lower recess in the vicinity of a locking means (56), according to claim 1 or 2,
**characterized** in that
the first door plate area (8) is formed by a base plate (5), whose shapes can be fixed as upper and lower retaining blocks (19, 21) in recesses (36, 37) of a door leaf (2),
that as second door plate area (9) is constructed an attached plate (3), on whose inside is mounted as the tumbler (7) a vertically adjustable sliding plate (20), and
that the base plate (5) is constructed symmetrically to a longitudinal axis (13) and can be positioned alternatively along the attached plate (3).

4. Locking device according to claim 3,
**characterized** in that
the upper retaining block (19) of the base plate (5) is located in the vicinity of the rocking lever axis (53) and the hinge-pinion (26) and is constructed identically to the lower retaining block (21), and that in the vicinity of the lower retaining block (21) a cylinder lock (57) is provided as locking device (56).

5. Locking device according to claim 3 or 4,
**characterized** in that
the upper and lower retaining block (19, 21) of the base plate (5), which are held in recesses (36, 37) of a hat section (50) of the door leaf (2), are constructed in complementary manner to the recesses (36, 37) and in particular rectangular and that for fixing of the retaining blocks (19, 21) fastening elements (54) can be introduced from the hat section (50) of the door leaf (2).

6. Locking device according to one of the claims 3 to 5,
**characterized** in that
the retaining blocks (19, 21) are provided with caps (52) and are fixable in the recesses (36, 37), and
that for sealing the upper and lower retaining blocks (19, 21) the caps (52) are located in the vicinity of the door leaf (2).

7. Locking device according to claim 6,
**characterized** in that
the retaining blocks (19, 21) can be sealed with the caps (52) and with a seal (58).

8. Locking device according to one of the preceding claims,
**characterized** in that
the sliding plate (20), which is operable by means of the rocking lever (25) and the hinge-pinion (26), is in operative connection with a locking rod (12) arranged perpendicularly to the sliding plate (20), and
that in the vicinity of the door plate (4) a dog (16) is connected with the locking rod (12).

9. Locking device according to one of the preceding claims,
**characterized** in that
the hinge-pinion (26) is connected by means of meshing teeth (23, 24) of the sliding plate (20) with the dog (16) and the locking rod (12), and
that the hinge-pinion (26) and the sliding plate (20) are almost positively received by the base plate (5) or the attached plate (3).

10. Locking device according to one of the preceding claims,
**characterized** in that
the dog (16) is adjustable on the inside of the door (2) and in the vicinity of the attached plate (3) and is connected by means of connecting areas (17) with the locking rod (12), and
that the dog (16) with a nose (18) is guided in a recess (22) of the orthogonally arranged sliding plate (20).

11. Locking device according to one of the preceding claims,
**characterized** in that
at least one rod guide (30) is provided, which receives the locking rod (12) above and/or below the dog (16), and
that each rod guide (30) has a guide block (32) fixed to the inside of the door (2) and which is provided with a vertical recess (33) constructed in complementary manner to the cross-section of the locking rod (12).

12. Locking device according to claim 11,
**characterized** in that
the guide block (32), which is approximately U-shaped, has an insertion opening (34) for the locking rod (12) and can be fixed to the door (2) in a detachable and displaceable manner.

13. Locking device according to one of the preceding claims,
**characterized** in that
rolls (38) are arranged on both sides of the locking rod (12) and form the locking element (14) with said locking rod (12), and
that the cupboard-side receptacle (40) comprises complementary formed and vertical wedge surfaces (42) in which the locking element (14) engages in locked position.

14. Locking device according to one of the preceding claims,
**characterized** in that
the cupboard-side receptacles (40), which can be fixed in a T-slot (44) of a vertical hollow section (45) of a cupboard or cabinet frame (46), are constructed as double hooks (41) with a spacing opening (48) directed towards the door (2) for the locking rod (12).

15. Locking device according to one of the preceding claims,
**characterized** in that
the sliding plate (20) is fixed by fastening elements (27) to the attached plate (3), and
that in the vicinity of the fastening elements (27) are formed vertical recesses (28, 29).

16. Locking device according to claim 3,
**characterized** in that
as handle (6) a rocking lever (25) is arranged on the base plate (5) and which in locked position is positively received by said base plate (5).

17. Locking device according to claim 16,
**characterized** in that
the rocking lever (25) can be locked by means of a locking device (56), and
that a cylinder lock (57) is positioned in the lower retaining block (21).

18. Locking device according to claim 16,
**characterized** in that
a shortened rocking lever (65) is provided, which can be fixed by means of an indexing element (67) and a counter-rest (69) in a trough-shaped recess (63) of the base plate (5).

19. Locking device according to claim 18,
**characterized** in that
the counter-rest (69) has a lever-like construction and is positioned in the vicinity of the lower retaining block (21).

## Revendications

1. Dispositif de fermeture pour portes de boîtiers ou d'armoires, comprenant un mécanisme à verrou (10) actionnable au niveau d'une plaque de porte (4) à l'aide d'une poignée (6) et d'une gâchette (7) et comprenant au moins un logement (40) côté boîtier ou armoire pour un élément de verrouillage (14),
**caractérisé en ce que** la plaque de porte (4) est divisée en deux et présente une première zone de plaque (8) recevant la poignée (6) et une deuxième zone de plaque (9),
**en ce que**, sur une face intérieure de la deuxième zone de plaque (9), une plaque de poussée (20) mobile verticalement est conformée en tant que gâchette (7) pour le mécanisme à verrou (10),
**en ce que** le mécanisme à verrou (10) présente une tige de fermeture (12) en liaison active avec la plaque de poussée (20), placée en particulier perpendiculairement, qui peut être actionnée au moyen de la plaque de poussée (20), et
**en ce qu'**est placé sur la tige de fermeture (12) l'élément de verrouillage (14) au nombre d'au moins un, lequel est tenu en position de fermeture dans le logement côté armoire (40) au nombre d'au moins un.

2. Dispositif de fermeture selon la revendication 1,
**caractérisé en ce que** la plaque de poussée (20) ainsi que les première et deuxième zones de plaque (8, 9) sont conformées pour une butée de porte à droite et à gauche, et
**en ce que** la plaque de poussée (20) est munie de dents supérieures et inférieures (23, 24) qui s'engrènent sur un engrenage ou sur un pignon (26) à mandrin articulé de la poignée (6).

3. Dispositif de fermeture pour portes de boîtiers ou d'armoires, comprenant une plaque de porte (4) qui présente un levier pivotant (25) en tant que poignée et des évidements pour se mettre en prise dans des creux de la porte, un creux supérieur étant formé au niveau d'un axe de levier pivotant (53) et un creux inférieur étant formé au niveau d'un dispositif de fermeture (56), selon la revendication 1 ou 2,
**caractérisé en ce que** la première zone de plaque (8) est formée d'une plaque de base (5) dont les évidements peuvent être fixés en tant que blocs de maintien supérieurs et inférieurs (19, 21) dans des creux (36, 37) d'un vantail de porte (2),
**en ce que** la deuxième zone de plaque (9) est formée d'une plaque d'embase (3), sur la face inférieure de laquelle est montée, en tant que gâchette (7), une plaque de poussée (20) mobile verticalement, et
**en ce que** la plaque de base (5) est symétrique par rapport à un axe longitudinal (13) et peut être placée au choix le long de la plaque d'embase (3).

4. Dispositif de fermeture selon la revendication 3,
**caractérisé en ce que** le bloc de maintien supérieur (19) de la plaque de base (5) est placé au niveau de l'axe (53) du levier pivotant et du pignon (26) à mandrin articulé, et est formé identique au bloc de maintien inférieur (21), et
**en ce qu'**au niveau du bloc de maintien inférieur (21) est placée une serrure cylindrique (57) en tant que dispositif de fermeture (56).

5. Dispositif de fermeture selon la revendication 3 ou 4,
**caractérisé en ce que** les blocs de maintien supérieur et inférieur (19, 21) de la plaque de base (5), qui sont maintenus dans des creux (36, 37) d'un profil de crête (50) du vantail de porte (2), sont formés complémentaires des creux (36, 37) et en particulier rectangulaires, et
**en ce que**, pour fixer les blocs de maintien (19, 21), des éléments de fixation (54) peuvent être introduits depuis le profil de crête (50) du vantail de porte (2).

6. Dispositif de fermeture selon l'une des revendications 3 à 5,
**caractérisé en ce que** les blocs de maintien (19, 21) sont munis de capuchons (52) et peuvent être fixés dans les creux (36, 37), et
**en ce que** les capuchons (52) sont placés au niveau du vantail de porte (2) pour fermer hermétiquement les blocs de maintien supérieur et inférieur (19, 21).

7. Dispositif de fermeture selon la revendication 6,
**caractérisé en ce que** les blocs de maintien (19, 21) peuvent être fermés hermétiquement avec les capuchons (52) et avec un joint (58).

8. Dispositif de fermeture selon l'une des revendications précédentes,
**caractérisé en ce que** la plaque de poussée (20), qui peut être actionnée par l'intermédiaire du levier pivotant (25) et du pignon (26) à mandrin articulé, est en liaison active avec une tige de fermeture (12) placée perpendiculairement à la plaque de poussée (20), et
**en ce qu'**un coulisseau (16) est relié à la tige de fermeture (12) au niveau de la plaque de porte (4).

9. Dispositif de fermeture selon l'une des revendications précédentes,
**caractérisé en ce que** le pignon (26) à mandrin articulé est relié par des dents d'engrenage (23, 24) de la plaque de poussée (20) au coulisseau (16) et à la tige de fermeture (12), et
**en ce que** le pignon (26) à mandrin articulé et la plaque de poussée (20) sont logés presque en engagement positif dans la plaque de base (5) ou la plaque d'embase (3).

10. Dispositif de fermeture selon l'une des revendications précédentes,
**caractérisé en ce que** le coulisseau (16) est mobile au niveau du côté intérieur de la porte (2) et de la plaque d'embase (3), et est relié par l'intermédiaire de zones de jonction (17) à la tige de fermeture (12), et
**en ce que** le coulisseau (16) est guidé par un nez (18) dans un creux (22) de la plaque de poussée (20), laquelle s'étend à angle droit.

11. Dispositif de fermeture selon l'une des revendications précédentes,
**caractérisé en ce qu'** au moins un guidage (30) de tige est prévu, qui recoit la tige de fermeture (12) au-dessus et/ou au-dessous du coulisseau (16), et
**en ce que** chaque guidage (30) de tige présente un bloc de guidage (32) fixé sur la face intérieure de la porte (2), bloc qui est muni d'un évidement (33) vertical formé complémentaire de la section transversale de la tige de fermeture (12).

12. Dispositif de fermeture selon la revendication 11,
**caractérisé en ce que** le bloc de guidage (32), qui est conformé approximativement en U, présente une ouverture d'introduction (34) pour la tige de fermeture (12) et peut être fixé sur la porte (2) de manière amovible et mobile.

13. Dispositif de fermeture selon l'une des revendications précédentes,
**caractérisé en ce que** des rouleaux (38) sont placés de chaque côté sur la tige de fermeture (12) et forment avec la tige de fermeture (12) l'élément de verrouillage (14), et
**en ce que** le logement (40) côté armoire présente des surfaces coniques (42) verticales et formées de facon complémentaire, dans lesquelles s'engage l'élément de verrouillage (14) dans la position de fermeture.

14. Dispositif de fermeture selon l'une des revendications précédentes,
**caractérisé en ce que** les logements (40) côté armoire, qui peuvent être fixés dans une rainure en T (44) d'un profil creux vertical (45) d'un cadre d'armoire ou de boîtier (46), sont conformés en doubles crochets (41) avec une ouverture d'espacement (48) tournée vers la porte (2) pour la tige de fermeture (12).

15. Dispositif de fermeture selon l'une des revendications précédentes,
**caractérisé en ce que** la plaque de poussée (20) est fixée par des éléments de fixation (27) à la plaque d'embase (3), et
**en ce que** des creux verticaux (28, 29) sont formés au niveau des éléments de fixation (27).

16. Dispositif de fermeture selon la revendication 3,
**caractérisé en ce que,** en guise de poignée (6), un levier pivotant (25) est placé sur la plaque de base (5), lequel, en position de fermeture, est recu en engagement positif par la plaque de base (5).

17. Dispositif de fermeture selon la revendication 16,
**caractérisé en ce que** le levier pivotant (25) peut être fermé par l'intermédiaire d'un dispositif de fermeture (56) et
**en ce qu'**une serrure cylindrique (57) est placée dans le bloc de maintien inférieur (21).

18. Dispositif de fermeture selon la revendication 16,
**caractérisé en ce qu'**un levier pivotant raccourci (65) est prévu, qui peut être fixé par l'intermédiaire d'un élément d'encliquetage (67) et d'un contre-support (69) dans un évidement de type cuvette (63) de la plaque de base (5).

19. Dispositif de fermeture selon la revendication 18,
**caractérisé en ce que** le contre-support (69) est conformé en levier et est placé au niveau du bloc de maintien inférieur (21).
